# NEUE EUROPÄISCHE PATENTSCHRIFT

(11) **EP 0 908 323 B2**
(45) Veröffentlichungstag und Bekanntmachung des Hinweises auf die Entscheidung über den Einspruch: **10.01.2007**
(45) Hinweis auf die Patenterteilung: 15.01.2003
(21) Anmeldenummer: 98118532.5
(22) Anmeldetag: 30.09.1998
(51) Int. Cl.: B41M 1/34, H04N 1/54, C09C 1/00

(54) **Verfahren zur Herstellung keramischer Mehrfarbendrucke mit verbesserter Reproduktionsqualität und Mittel zu seiner Durchführung**
Process and material for producing multicoloured prints with improved quality of reproduction on ceramic
Méthode et agent pour l'impression polychrome d'une qualité de reproduction ameliorée sur céramique

(30) Priorität: 09.10.1997 DE 19744484
(43) Veröffentlichungstag der Anmeldung: 14.04.1999
(73) Patentinhaber: Ferro GmbH, 60327 Frankfurt (DE)
(72) Erfinder: Hilgenfeld, Hans, 55294 Bodenheim (DE); Koch, Karl, 82377 Penzberg (DE); Diefenbach, Fritz, 64665 Alsb.-Hähnlein (DE)
(74) Vertreter: Reinhardt, Markus

(56) Entgegenhaltungen:
- EP-A- 0 741 490
- DE-A- 3 638 170
- US-A- 4 290 533
- US-A- 4 614 967
- US-A- 5 194 089
- US-A- 5 395 414

## Beschreibung

Die Erfindung betrifft ein Verfahren zur Herstellung keramischer Mehrfarbendrucke, insbesondere Siebenfarbendrucke, mit verbesserter Reproduktionsqualität. Das Verfahren umfaßt die Stufen farbmetrische Abtastung einer Bildvorlage mittels eines Farbscanners, Erstellung eines Druckprofils und der Farbauszüge durch ein elektronisches Bildverarbeitungssystem, Herstellung des Druckträgers, direktes oder indirektes Bedrucken eines brandfähigen Substrats und den Brand.

Graphische Reproduktionen werden meistens im Vierfarbendruck durchgeführt. In Europa basieren die Farbauszüge sowie die entsprechenden Druckfarben des Vierfarbensatzes auf der Euroskala (EN 16538/539). Die genormten Farben des Vierfarbensatzes sind die Buntfarben Gelb (Y), Magentarot (M) und Cyanblau (C) sowie die unbunte Farbe Schwarz (S). Die bunten Grundfarben Orangerot (R), Violettblau (B) und Grün (G) werden durch Kombination der Primärfarben Y, M und C dargestellt. Da die der Euroskala zugrundeliegenden Farben bereits eng am theoretischen Farbort liegen, wird im graphischen Vierfarbendruck eine hohe Reproduktionsqualität erzielt. Nur in seltenen Fällen, insbesondere zur Herstellung graphischer Reproduktionen mit leuchtenderen Farben in den Farbbereichen R, B und G wird vom Siebenfarbendruck und der ihm zugrundeliegenden Küppers-Skala Gebrauch gemacht (H. Küppers in Der Fadenzähler, Firmenschrift der Gebr. Schmidt Druckfarben, Frankfurt, 1991).

Bei der Herstellung keramischer Drucke liegen im Vergleich zu graphischen Drucken wesentlich ungünstigere Verhältnisse vor: Die verfügbare Farbpalette an keramischen Farben ist enger als diejenige zur Herstellung graphischer Reproduktionen und zudem entsprechen der Farbort sowie die Intensität der drei keramischen Buntfarben Y, M und C nicht der Euro-Norm. Da bisher auch beim keramischen Mehrfarbendruck in der Regel die Euroskala verwendet wurde, war eine originalgetreue Reproduktion nicht möglich. Im keramischen Vierfarbendruck waren zudem nicht nur bei den Grundfarben Y, M und C Abstriche hinzunehmen, sondern erst recht bei der Wiedergabe leuchtender Farben in den Bereichen R, B und G. Weitere Problems ergeben sich beim keramischen Druck dadurch, daß die dem zu verwendenden Mehrfarbensatz zugrundeliegenden Farben nicht nur nach deren Farbort und -Intensität ausgewählt werden können, sondern wegen des sich an den Druck anschließenden keramischen Brandes auch an die Brennstabilität der Farben, an die Verträglichkeit der Farben miteinander, an die Verträglichkeit der Farben mit dem Fluß, an die Spülmaschinenbeständigkeit und eine möglichst geringe Bleiund Cadmiumabgabe hohe Anforderungen gestellt werden müssen.

Zur Herstellung von keramischen Vierfarbendrucken mit besserer Übereinstimmung von Originalvorlage und Reproduktion waren aufwendige Korrekturen unter Einsatz sogenannter Schmuckfarben notwendig (E. Wagg und H. Hilgenfeld, Screen Printing, Nov. 1995): Farblich kritische Dekorflächen wurden im Farbauszug ausgespart und durch Schmuckfarben, insbesondere solche aus den Bereichen R, B und G wieder geschlossen; derartige Korrekturen mußten von erfahrenen Lithographen durchgeführt werden.

Das Dokument US-A-4 290 533 beschreibt ein phototechnisches Verfahren zur Herstellung eines keramischen Mehrfarbendrucks.

Aufgabe der Erfindung ist demgemäß, beim keramischen Mehrfarbendruck die Reproduktionsqualität zu verbessern.

Die Aufgabe wird gelöst durch ein Verfahren gemäß Anspruch 1.

Es handelt sich bei dem Mehrfarbendruck um einen Sechs Siebenfarbendruck. Im keramischen Siebenfarbendruck erzeugte Drucke zeichnen sich durch einen bisher nicht gekannten erweiterten Farbraum und damit eine wesentlich verbesserte Reproduktionsqualität aus.

Die farbmetrische Abtastung der Bildvorlage und Erstellung eines Druckprofils kann unter Einsatz eines am Markt erhältlichen profilierbaren Farbscanners einschließlich eines dafür geeigneten elektronischen Bildverarbeitungssystems erfolgen. Software zur Profilierung der Scanner ist im Handel erhältlich. Bei der Profilierung werden die Farbwerte eines Bildpunktes vom Scanner erfaßt und mittels einer in einer Datei des elektronischen Bildverarbeitungssystems abgelegten Matrix, welche die erforderliche Fehlerkorrektur beschreibt, auf die tatsächlichen Farbwerte umgerechnet. Wesentliches Merkmal des erfindungsgemäßen Verfahrens ist, daß für die Erstellung des Computer-Algorithmus für die Festlegung des Farbraums sowie die Separation der Bildpunkte in die speziellen Druckfarben Farbdaten von Farbfeldern zugrundegelegt wurden, welche unter Verwendung von Farben eines keramischen Mehrfarbensatzes, eines keramischen Sechs Siebenfarbensatzes, erzeugt wurden. Zwecks Erstellung des genannten Algorithmus werden aus keramischen Farben eines Mehrfarbensetzes Farbfelder durch Kombination miteinander verträglicher Grundfarben aus der Reihe Gelb (Y), Magenta (M), Cyanblau (C), Rotorange (R), Blauviolett (B), Grün (G) sowie Schwarz (S) in verschiedene Mischungsverhältnissen erstellt und bezüglich ihres jeweiligen Farborts und der Intensität vermessen. Die erhaltenen Farbdaten definieren den beim keramischen Druck tatsächlich erreichbaren Farbraum; dieser wurde der Erstellung des Computer-Algorithmus für die Separation zugrundegelegt. Die Farbdaten der einigen tausend vermessenen Farbfelder bilden die Stützpunkte der Separationsmatrix. Ein mit vierdimensionalen Matrizen und nicht-linearen Abhängigkeiten vertrauter Programmierer kann aus den Stützpunkten den Algorithmus für die Zwischenwerte ermitteln.

Beim gängigen Vierfarbendruck umfaßt die Farbkombination die Farben M, Y und C, beim Siebenfarbendruck, der zu einem erweiterten Farbraum führt, die Farben M, Y, C, R, B und G sowie jeweils S. Unter Einsatz der vom Scanner gemessenen und dann profilierten Farbdaten einer Bildvorlage und Verwendung eines auf der Basis keramischer Farben ermittelten Computer-Algorithmus für die Separation wird vom elektronischen Bildverarbeitungssystem das Druckprofil erstellt, das die zu jedem Bildpunkt erforderlichen Farben und deren Fiächenverhaltnis umfaßt.

Sofern beim Druck keramischer Farben eines im wesentlichen gleichen, vorzugsweise Identischen Mehrfarbensatzes, wie er der Ermittlung des Computer-Algorithmus zugrundegelegt wurde, verwendet wird, werden wesentlich originalgetreuere Druckergebnisse erzielt. Obgleich die Probleme des keramischen Mehrfarbendrucks lange bekannt waren und eine Behebung der Probleme aufwendige Korrekturen erforderlich machte, wurde bisher von einer auf keramischen Farben basierenden Separationsmatrix überraschenderweise nie Gebrauch gemacht. Eine derartige Maßnahme war nicht naheliegend,weil bei der Festlegung eines Farbensatzes nicht nur die optischen Aspekte, sondern zusätzlich Aspekte der Verträglichkeit der Farben untereinander, der Verträglichkeit der Farben mit dem Flußmittel, der Pb- und Cd-Abgaben, der Spülmaschinenbeständigkeit und Verdruckbarkeit berücksichtigt werden mußten. Das Auffinden geeigneter Farbkombinationen eines Farbsatzes setzte demgemäß die Untersuchung tausender Kombinationen voraus.

Die Ausgabe der erfindungsgemäß verbesserten Farbauszüge für jede Farbe durch das elektronische Bildverarbeitungssystem sowie daraus die Herstellung von Diapositiven erfolgen in bekannter Weise. Unter Einsatz der Diapositive lassen sich in bekannter Weise die im Druckverfahren zu verwendenden Druckträger, beispielsweise die Schablonen für den Siebdruck, Druckplatten für den Offsetdruck oder Gravurplatten für den Tampondruck, erzeugen. Der Druck selbst kann direkt auf den brandfähigen Träger, etwa Keramik, Porzellan oder Glas, erfolgen. Beim indirekten Druck wird meistens von der bekannten Abziehbildtechnik Gebrauch gemacht, wobei zunächst der Druck der keramischen Farben unter Einsatz der Druckträger auf mit einer Leim-oder Wachsschicht versehenes Abziehbildpapier als Zwischenträger erfolgt und dann das Dekor auf dem Zwischenträger, im allgemeinen nach Überfilmen desselben, auf den brandfähigen Träger übertragen wird. An den Druck schließt sich der Brand an, wobei sich die Brennbedingungen in bekannter Weise nach dem Trägermaterial sowie der Dekorart, wie Aufglasur, in- oder Unterglasur, die bereits bei der Auswahl des eingesetzten Mehrfarbensatzes berücksichtigt werden muß, richten.

Gemäß einer bevorzugten Ausführungsform des erfindungsgemäßen Verfahrens handelt es sich bei dem Mehrfarbendruck um einen Siebenfarbendruck, der bisher zur Herstellung keramischer Dekore nie angewandt wurde, da wegen ungenügender Qualität der bisher erhältlichen Farbauszüge bereits der Vierfarbendruck einen hohen Korrekturaufwand erforderte. Durch die Verwendung eines erfindungsgemäß unter Einsatz von Farbdaten eines keramischen Siebenfarbensatzes ermittelten Algorithmus für die Separation (Separationsmatrix) sind Farbauszüge mit wesentlich verbesserter Reproduktionsqualität erhältlich. Die Reproduktionsqualität des erfindungsgemäßen Siebenfarbendrucks ist auch gegenüber dem Vierfarbendruck unter Einsatz eines optimierten Vierfarbensatzes verbessert. Durch den Übergang vom keramischen Vierfarbendruck auf den keramischen Siebenfarbendruck wird der reproduzierbare Farbraum erweitert und zudem sind leuchtendere Farbtöne erhältlich.

Damit ist nun erstmals bei keramischen Dekoren eine Bildqualität möglich, wie sie bisher unbekannt war.

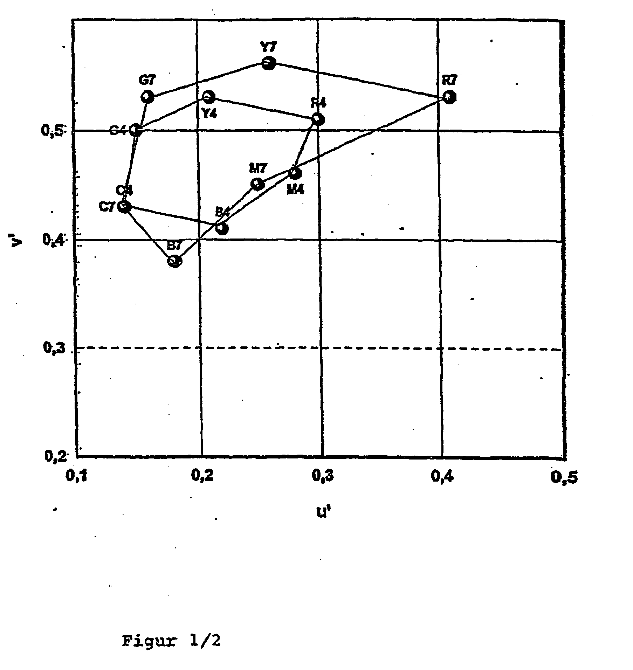

Figur 1 zeigt den darstellbaren Farbraum im Vier- und Siebenfarbendruck im u'.v'-System gemäß DIN 5033, Teil 3.

Dargestellt sind die Grenzwerte für den jeweils eingesetzten Farbensatz für die Aufglasurdekoration, nämlich Y₄, M₄, C₄ und Y₇, R₇, M₇, B₇, C₇, G₇ sowie die aus Y₄, M₄ und C₄ abgeleiteten Sekundärfarben R₄, B₄ und G₄. Aufgrund der eingeschränkten Auswahl der im Vierfarbendruck zur Verfügung stehenden Pigmenttypen ist der Farbraum kleiner als im Siebenfarbendruck, wo die Farben R, B und G zusätzlich zu Y, M und C als Primärfarben eingesetzt werden. Die in Kenntnis der in Figur 1 dargestellten Farbräume an sich naheliegend erscheinende Möglichkeit, den Farbraum im Vierfarbendruck durch einen Austausch von zum Beispiel Y₄ gegen Y₇ zu erweitern, ist nicht möglich, weil M₄ Mit Y₇ nicht verträglich ist, da bei dieser Kombination nur schmutzige Orangetöne erhalten werden.

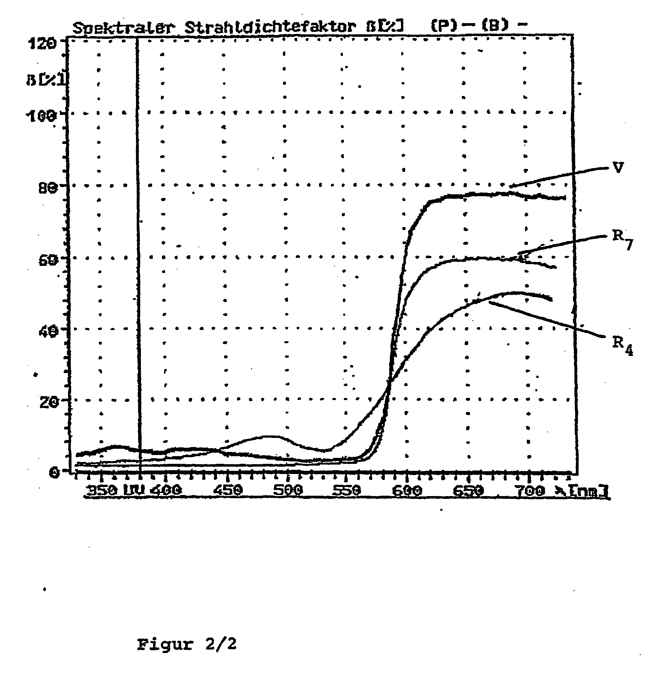

Figur 2 zeigt Remissionskurven der Farbe Orangerot, dargestellt im keramischen Vier- und Siebenfarbendruck im Vergleich zur mit organischen Farben gedruckten Vorlage basierend auf der Euroskala. Die Kurve V entspricht der Vorlage, die Kurve R₄ dem Vier- und die Kurve R₇ dem keramischen Siebenfarbendruck. Die Verbesserung der Reproduktionsqualität beim Übergang vom keramischen Vierauf den Siebenfarbendruck ist deutlich erkennbar.

Die einzelnen Farben bestehen im wesentlichen aus dem farbgebenden Pigment oder Pigmentgemisch und einem auf die Brennbedingungen abgestimmten üblichen Glasfluß aus im wesentlichen einer oder mehrerer Glasfritten. Sofern erwünscht, kann die Anzahl der Farben eines Farbensatzes um eine Buntfarbe reduziert werden. Die Pigmente der Farbensätze sind auf die Einbrennbedingungen und die Applikationsform abgestimmt: Während beispielsweise beim Brand eines Drucks auf Glas im Bereich von üblicherweise 500 bis 650 °C Cadmiumsulfid als Y verwendbar ist, muß im Falle eines Inglasur- oder Unterglasurdekors auf Keramik oder Porzellan, dessen Brand üblicherweise im Bereich von 950 bis 1200 °C erfolgt, ein gegenüber CdS temperaturstabileres Pigment, wie Zirkon-Praseodym-Gelb, eingesetzt werden. Pigmente für die Aufglasurdekoration auf Keramik und Porzellan müssen im Temperaturbereich von im allgemeinen 750 bis 900°C bei Normalbrand oder im Falle eines Hochtemperaturschnellbrands bei darüber liegender Temperatur farbstabil sein.

Die Kombination der Farben eines Farbensatzes umfaßt als Pigmentkomponente außer einem Schwarzpigment auf Spinellbasis Buntpigmente auf der Basis:
(i) für die Aufglasurdekoration im Siebenfarbendruck CdS als Y, Cr₂O₃/CdS als Grün (G) Co(Al, Cr)₂O₄ als C, CoAl₂O₄ / Goldpurpur als Blauviolett (B), Ag-freier Goldpurpur als M und Cd(S,Se) als Orangerot (R),
(ii) für die In- oder Unterglasur im Siebenfarbendruck, Zirkon-Praseodym-Gelb als Y, Cr₂O₃/CO (OH)₂ mit einem Co/Cr-Atomverhältnis im Bereich von 0,15 bis 0,25 als G, Zirkon-Vanadium-Blau als C, Co-silikat oder CoO in Glas als B, Cr-dotiertes CaSnSiO₅ (Sphentyp) als M und Einschlußpigment Cd(S,Se) in ZrSiO₄ als R, und
(iii) für die Glasdekoration im Sechsfarbendruck CdS als Y, Co(Al,Cr)₂O₄/CdS als G, Co(Al,Cr)₂O₄ als C, (Co,Zn)-silikat als B und Cd(S.Se) als M.

Wie bereits ausgeführt, zeichnen sich die Farben jedes erfindungsgemäßen Farbensatzes außer durch gute Farbwerte jeweils durch eine gute Verträglichkeit der Farben untereinander, eine gute Verträglichkeit mit dem in der Farbe enthaltenden Flußmittel, eine hohe Spülmaschinenbeständigkeit und geringe Cd- und Pb-Lässigkeit aus.

Ein Teil der Verbesserung der Reproduktionsqualität im Bereich Grün und Magenta für die Inglasur- und Unterglasurdekoration im Siebenfarbendruck konnte durch neue Druckfarben erzielt werden. Die grüne Farbe besteht aus einer Glasfritte als Flußmittel und Cr₂O₃ in Kombination mit Co(OH)₂ als Pigment, wobei das Co/Cr-Atomverhältnis im Bereich von 0,15 bis 0,25 liegt. Bei Magenta handelt es sich um ein Cr-dotiertes CaSiO₅ (Sphentyp), das hinsichtlich des Farborts optimiert wurde.

Unter Verwendung eines auf die Brenntemperatur abgestimmten keramischen Siebenfarbensatzes, Zugrundelegung desselben bei der Erstellung des Algorithmus für die Separation sind Dekore mit weiter verbesserter Reproduktionsqualität erhältlich.

### Beispiel

a) Eingesetzt wurde ein Vierfarbensatz für die Aufglasurdekoration mit den Farben Gelb (Nr. 13651), Magenta (Nr. 77567), Cyan (Nr. 121522) und Schwarz (Nr. 14209) - die Nummern sind Produktnummern der Cerdec AG.
   Unter Einsatz dieser Farben wurden Farbfelder in verschiedenen Mischungsverhältnissen der Druckfarben hergestellt und farbmetrisch vermessen. Die Meßdaten dienten als Stützpunkte für die Ermittlung des Computer-Algorithmus für die Separation. Eingesetzt wurde ein profilierbarer Farbscanner mit einem elektronischen Bildverarbei-tungssystem und geeigneter Software (Color Management Software Color Blind® der Firma Color Solutions Inc. Europa). Eine Bildvorlage wurde gescannt, daraus vom Bildverarbeitungssystem das Druckprofil erstellt. Unter Zugrundelegung der im elektronischen Bildverarbeitungssystem gespeicherten Separationsmatrix wurden hieraus Farbauszüge erzeugt; anschließend wurden in bekannter Weise Diapositive und Siebdruckschablonen hergestellt und hiermit glasierte Keramik unter Verwendung des genannten keramischen Farbsatzes bedruckt und gebrannt Erhalten wurden Vierfarbendrucke mit hoher Reproduktionsqualität.
b) Analog a) wurde der Scanner mit dem nachfolgenden Siebenfarbensatz kalibriert: Gelb (Nr. 13884), Grün (Nr. 111234), Cyan (Nr. 121522), Blauviolett (Nr. 721233), Magenta (Nr. 77505), Rotorange (Nr. 17891) und Schwarz (Nr. 14209) - die angegebenen Nummern sind Produktnummern der Cerdec AG. Unter Verwendung eines so kalibrierten Scanners wurde unter Einsatz der gleichen Druckfarben eine gegenüber a) weiter verbesserte, also originalgetreuere Bildqualität erhalten.

## Patentansprüche

1. Verfahren zur Herstellung eines keramischen Mehrfarbendrucks mit verbesserter Reproduktionsqualität,
umfassend farbmetrische Abtastung einer Bildvorlage mittels eines profilierbaren Scanners,
Erstellung eines Druckprofils und Ausgabe eines Farbauszugs für jede Farbe durch ein elektronisches Bildverarbeitungssystem,
Herstellung je eines Diapositivs für jeden Farbauszug,
Herstellung der im Druckverfahren einzusetzenden Druckträger unter Einsatz der Diapositive,
Bedrucken eines brandfähigen Trägers oder eines Zwischenträgers unter Einsatz der Druckträger und keramischer Druckfarben und Einbrennen des direkt oder indirekt bedruckten brandfähigen Trägers in an sich bekannter Weise,
**dadurch gekennzeichnet, daß** man ein elektronisches Bildverarbeitungssystem verwendet, dessen Algorithmus für den druckbaren Farbumfang und die Separation Farbdaten von aus keramischen Farben eines Mehrfarbensatzes erzeugten Farbfeldern zugrundegelegt werden,
wobei der Mehrfarbensatz eine schwarze und mehrere bunte keramische Farben umfasst und man zur Erzeugung der Farbfelder einen Sechs- oder Siebenfarbensatz verwendet, wobei jede Farbe im wesentlichen aus einem oder mehreren Pigmenten und einem Glasfluß aus im wesentlichen einer oder mehreren Glasfritten besteht und eine Farbe Schwarz auf Spinellbasis darstellt,
wobei die Pigmente der bunten Farben des Mehrfarbensatzes ausgewählt sind aus der Reihe der auf die Einbrennbedingungen und Applikationsform des Drucks abgestimmten Pigmentkombinationen:
- für die Aufglasurdekoration im Siebenfarbendruck CdS als Y, Cr₂O₃/CdS als Grün (G), Co(Al,Cr)₂O₄ als C, CoAl₂O₄ / Goldpurpur als Blauviolett (B), Ag-freier Goldpurpur als M und Cd(S,Se) als Orangerot (R), oder
- für die In- oder Unterglasur im Siebenfarbendruck, Zirkon-Praseodym-Gelb als Y, Cr₂O₃/Co(OH)₂ bei einem Co/Cr-Atomverhältnis im Bereich von 0,15 bis 0,25 als G, Zirkon-Vanadium-Blau als C, Co-silikat oder CoO in Glas als B, Cr-dotiertes CaSnSiO₅ (Sphentyp) als M und Einschlußpigment Cd(S,Se) in ZrSiO₄ als R, oder
- für die Glasdekoration im Sechsfarbendruck CdS als Y, Co(Al,Cr)₂O₄/CdS als G, Co(Al,Cr)₂O₄ als C, (Co,Zn)-silikat als B und Cd(S,Se) als M.

2. Verfahren nach Anspruch 1,
**dadurch gekennzeichnet,**
**daß** man zur Herstellung der Farbfelder unter Brennbedingungen miteinander verträgliche keramische Farben aus der Reihe Magenta (M), Gelb (Y), Cyan (C), Rotorange (R), Blauviolett (B), Grün (G) und Schwarz (S) einsetzt.

3. Verfahren nach Anspruch 1 oder 2,
**dadurch gekennzeichnet,**
**daß** man sowohl für die Erzeugung der Farbfelder als auch zum Bedrucken des brandfähigen Trägers oder des Zwischenträgers identische keramische Farben einsetzt.

4. Verfahren nach einem der Ansprüche 1 bis 3,
**dadurch gekennzeichnet,**
**daß** man die Bildvorlage als Siebenfarbendruck unter Einsatz von keramischen Farben mit der Farbe M, Y, C, R, B und G sowie Schwarz (S) reproduziert.

5. Verfahren nach einem der Ansprüche 1 bis 4,
**dadurch gekennzeichnet,**
**daß** man die keramischen Farben eines Mehrfarbensatzes jeweils auswählt aus der Reihe der Aufglasurfarben der in- oder Unterglasurfarben oder der Glasfarben.

## Claims

1. Process for producing a multicoloured print with improved quality of reproduction on ceramic, comprising colorimetric scanning of an original by means of a profilable scanner, creating a print profile and establishing a colour separation for each colour by an electronic image processing system, producing a respective transparency for each colour separation, producing the print carrier to be used in the printing process using the transparency, printing a firable carrier or an intermediate carrier using the print carriers and ceramic printing inks and stoving the directly or indirectly printed firable carrier in a manner known *per se,* **characterised in that** an electronic image processing system is used, of which the algorithm for the printable colour range and separation was based on colour data of colour fields produced from ceramic colours of a multicolour set, wherein the multicolour set comprises one black and a plurality of chromatic ceramic colours and a six- or seven-colour set is used to produce the colour fields, each colour substantially consisting of one or more pigments and a glass flux of substantially one or more glass frits and one colour black being based on spinel, wherein the pigments of the chromatic colours of the multicolour set are selected from the pigment combinations adapted to the stoving conditions and form of application of the print:
- CdS as Y, Cr₂O₃/CdS as green (G), Co(Al,Cr)₂O₄ as C, CoAl₂O₄/gold-purple as blue-violet (B), Ag-free gold-purple as M and Cd(S,Se) as orange-red (R) for overglaze decoration in seven-colour printing, or
- zirconium-praseodymium yellow as Y, Cr₂O₃/Co(OH)₂ in a Co/Cr atomic ratio in the range of 0.15 to 0.25 as G, zirconium-vanadium blue as C, Co-silicate or CoO in glass as B, Cr-doped CaSnSiO₅ (Sphene type) as M and inclusion pigment Cd(S,Se) in ZrSiO₄ as R for inglaze or underglaze in seven-colour printing, or
- CdS as Y, Co(Al,Cr)₂O₄/CdS as G, Co(Al,Cr)₂O₄ as C, (Co,Zn)-silicate as B and Cd(S,Se) as M for glass decoration in six-colour printing.

2. Process according to claim 1, **characterised in that** the colour fields are produced using ceramic colours which are mutually compatible under firing conditions and are selected from the range comprising magenta (M), yellow (Y), cyan (C), red-orange (R), blue-violet (B), green (G) and black (S).

3. Process according to either claim 1 or claim 2, **characterised in that** identical ceramic colours are used both for producing the colour fields and for printing the firable carrier or the intermediate carrier.

4. Process according to any one of claims 1 to 3, **characterised in that** the original is reproduced as a seven-colour print using ceramic colours with the colour M, Y, C, R, B and G and black (S).

5. Process according to any one of claims 1 to 4, **characterised in that** the ceramic colours of a multicolour set are respectively selected from the range of overglaze, inglaze or underglaze colours or glass colours.

## Revendications

1. Procédé pour la fabrication d'une impression polychrome céramique avec une qualité de reproduction améliorée,
comprenant le scannage colorimétrique d'un document image au moyen d'un scanneur profilable,
l'établissement d'un profil d'impression et la sortie d'une sélection de couleurs pour chaque couleur grâce à un système électronique de traitement des images,
la fabrication d'une diapositive pour chaque sélection de couleurs,
la fabrication du support d'impression à utiliser pendant le procédé d'impression en utilisation les diapositives,
l'impression d'un support apte à la cuisson ou d'un support intermédiaire en utilisant les supports d'impression et des encres céramiques et cuisson du support apte à la cuisson imprimé directement ou indirectement d'une manière connue en soi,
**caractérisé en ce qu'**on utilise un système électronique de traitement des images dont des données de couleurs de champs de couleurs générés à partir d'encres céramiques d'un kit polychrome servent de base à l'algorithme pour l'étendue des couleurs imprimable et pour la séparation, le kit polychrome comprenant une encre noire et plusieurs encres céramiques en couleurs et un kit de six ou sept encres étant utilisé pour générer les champs de couleurs, chaque encre étant pour l'essentiel composée d'un ou plusieurs pigments et d'un fondant essentiellement issu d'une ou plusieurs frittes de verre et représentant une encre noire à base de spinelle,
les pigments des encres en couleurs du kit polychrome étant sélectionnés dans la série des combinaisons de pigments adaptées aux conditions de cuisson et à la forme d'application de l'impression:
- pour la décoration de surface en impression à sept couleurs du CdS pour Y, du Cr₂O₃/CdS pour le vert (G), du Co(Al, Cr)₂O₄ pour C, du CoAl₂O4 / pourpre aurique comme violet bleuté (B), du pourpre aurique sans Ag pour M et du Cd(S, Se) comme rouge orangé (R), ou
- pour la glaçure intérieure ou la sous-glaçure en impression à sept couleurs du jaune de zirconium et de praséodyme pour Y, du Cr₂O₃/Co(OH)₂ en cas de rapport atomique Co/Cr dans la plage de 0,15 à 0,25 pour G, du bleu de zirconium et de vanadium pour C, du co-silicate ou du CoO dans du verre pour B, du CaSnSiO₅ (type sphène) dopé au Cr pour M et un pigment d'inclusion Cd(S, Se) dans du ZrSiO₄ pour R ou
- pour la décoration du verre en impression à six couleurs du CdS pour Y, du Co(Al, Cr)₂O₄/CdS pour G, du Co(Al, Cr)₂O₄ pour C, du silicate de (Co, Zn) pour B et du Cd(S, Se) pour M.

2. Procédé selon la revendication 1,
**caractérisé en ce que** l'on emploie pour fabriquer les zones de peinture en conditions de cuisson, des peintures pour céramique qui peuvent se tolèrent entre elles dans la gamme du magenta (M), du jaune (Y), du cyan (C), du rouge-orange (R), du bleu-violet (B), du vert (G) et du noir (S).

3. Procédé selon la revendication 1 ou 2,
**caractérisé en ce que** l'on emploie aussi bien pour la production de zones de peinture que l'impression du support résistant à la cuisson ou du support intermédiaire, des peintures pour céramique identiques.

4. Procédé selon l'une des revendications 1 à 3,
**caractérisé en ce que** l'on reproduit le motif de l'image en impression en sept couleurs en utilisant des peintures pour céramique avec la couleur M, Y, C, R, B et G, ainsi que le noir (S).

5. Procédé selon l'une des revendications 1 à 4,
**caractérisé en ce que** l'on sélectionne respectivement les peintures pour céramique d'un jeu polychrome dans la gamme des peintures de surface des peintures en surface ou de sous-surface ou des peintures pour verre.
